# EUROPÄISCHE PATENTSCHRIFT

(11) **EP 3 444 487 B1**
(45) Veröffentlichungstag und Bekanntmachung des Hinweises auf die Patenterteilung: **25.03.2020**
(21) Anmeldenummer: 18184882.1
(22) Anmeldetag: 23.07.2018
(51) Int. Cl.: F16B 19/02, F16B 21/07, B60R 11/02, F16B 21/08

(54) **HALTERUNG, INSBESONDERE FÜR EINE ANZEIGEVORRICHTUNG EINES KRAFTFAHRZEUGS**
MOUNTING, IN PARTICULAR FOR A DISPLAY DEVICE OF A MOTOR VEHICLE
SUPPORT, EN PARTICULIER POUR UN DISPOSITIF D'AFFICHAGE D'UN VÉHICULE AUTOMOBILE

(30) Priorität: 18.08.2017 DE 102017118893
(43) Veröffentlichungstag der Anmeldung: 20.02.2019
(73) Patentinhaber: MAN Truck & Bus SE, 80995 München (DE)
(72) Erfinder: Stender, Stefan, 82131 Stockdorf (DE); Siflinger, Markus, 85604 Zorneding (DE)
(74) Vertreter: v. Bezold & Partner Patentanwälte - PartG mbB

(56) Entgegenhaltungen:
- DE-A1-102009 051 736
- DE-A1-102014 017 609
- DE-A1-102016 120 748
- FR-A1- 2 987 584

## Beschreibung

Die Erfindung betrifft eine Vorrichtung zum Halten einer Komponente, insbesondere einer Anzeigevorrichtung in einem Kraftfahrzeug. Ferner bezieht sich die Erfindung auf eine Vorrichtung zur Anbindung mindestens einer Interieurkomponente an einer A-Säule eines Kraftfahrzeugs.

Im Stand der Technik ist eine Vielzahl von Vorrichtungen zum Halten von Komponenten bekannt. Die Vorrichtungen können beispielsweise als bewegliche oder feste Halterungen ausgebildet sein. Insbesondere im Kraftfahrzeugbereich können aufgrund der im Betrieb des Kraftfahrzeugs sowie die bei Unfällen auftretenden Belastungen hohe Anforderungen an derartige Vorrichtungen bestehen.

Mit der Einführung von Spiegelersatzsystemen insbesondere für Nutzfahrzeuge ist es notwendig, Halterungen für die Anzeigevorrichtungen der von den Kameras des Spiegelersatzsystems aufgenommenen Bilder im Fahrerhaus vorzusehen.

Aus der DE 10 2014 017 609 A1 ist eine Lagerung eines Halters für ein Display in einer Armaturentafel eines Kraftfahrzeugs bekannt. Der Halter nimmt im Bereich eines Endes das Display auf. Im Bereich eines diesem Ende abgewandten Endes ist der Halter verschieblich in einer Aufnahme der Armaturentafel gelagert. Es sind Mittel vorgesehen, die den Halter in einer Funktionsstellung federvorgespannt festlegen und die bei Einwirkung einer Verschiebekraft auf den Halter eine Verschiebung des Halters ermöglichen.

Die EP 2 986 465 B1 offenbart eine Halterung für eine in einem Kraftfahrzeug, insbesondere einer kraftfahrzeugseitigen Armatur, zu haltende Anzeigeeinrichtung. Die Halterung umfasst wenigstens einen Träger mit wenigstens einer Lagervorrichtung zur Lagerung der Anzeigeeinrichtung, wobei die Lagervorrichtung über eine trägerseitig angeordnete Verstelleinrichtung relativ zu dem Träger lageverstellbar ist.

Die DE 10 2009 051736 A1 offenbart ein Verriegelungs-Befestigungs-Element. Es besteht aus einem Befestigungsteil, einem Träger-Steckerteil und einem abgefederten Einsatz. Es ermöglicht, verschiedene Teile auf einer Grundfläche aus Blech, Kunststoff oder ähnlichem Material zu befestigen. Mit einem Eindrücken des Träger-Steckerteils in das Befestigungsteil und den Einsatz werden die Teile ohne Schrauben und ohne zusätzliches Werkzeug montiert.

Nachteilig am bekannten Stand der Technik können eine ungenügende Haltbarkeit, eine komplizierte Montage, eine schwierige Ausrichtung der zu haltenden Komponente, eine große Teileanzahl usw. sein. Letztlich können die bekannten Vorrichtungen eine nur ungenügende Eignung zur Halterung einer Anzeigevorrichtung eines Spiegelersatzsystems in einem Kraftfahrzeug aufweisen.

Der Erfindung liegt die Aufgabe zu Grunde, Nachteile im Stand der Technik zu überwinden und insbesondere eine verbesserte Vorrichtung zum sicheren Halten einer Anzeigevorrichtung für ein Spiegelersatzsystem in einem Kraftfahrzeug zu schaffen. Die Vorrichtung soll insbesondere einen einfachen Aufbau aufweisen, eine einfache Installation/Montage der zu haltenden Komponente ermöglichen und/oder auch bei größeren Belastungen, die auf die Vorrichtung einwirken, einen sicheren Halt der Komponente durch die Vorrichtung gewährleisten.

Die Aufgabe wird gelöst durch eine Vorrichtung gemäß dem unabhängigen Anspruch. Vorteilhafte Weiterbildungen sind in den abhängigen Ansprüchen und der Beschreibung angegeben.

Gemäß einem ersten Aspekt ist die Vorrichtung ist zum Halten einer Komponente, insbesondere einer Anzeigevorrichtung in einem Kraftfahrzeug, geeignet. Die Vorrichtung weist einen Zapfen auf, der sich entlang einer Längsachse erstreckt und einen rotationsasymmetrischen Querschnitt senkrecht zur Längsachse aufweist. Die Vorrichtung weist einen Einsatz mit einer Zapfenaufnahme zum Aufsetzen des Einsatzes auf den Zapfen auf. Der Einsatz weist einen rotationsasymmetrischen Querschnitt senkrecht zur Längsachse auf, der so an den rotationsasymmetrischen Querschnitt des Zapfens angepasst ist, dass der Zapfen den Einsatz verdrehsicher bezüglich der Längsachse, insbesondere spielfrei, festlegt. Die Vorrichtung weist einen Träger zum Tragen der Komponente auf. Der Träger ist als ein Hohlkörper mit einer Einsatzaufnahme zum Aufnehmen des Einsatzes ausgebildet. Der Träger weist einen rotationsasymmetrischen Querschnitt senkrecht zur Längsachse auf, der so an den rotationsasymmetrischen Querschnitt des Einsatzes angepasst ist, dass der Einsatz den Träger verdrehsicher bezüglich der Längsachse, insbesondere spielfrei, festlegt. Eine erste Rastverbindung ist zum lösbaren Sichern des Einsatzes am Zapfen und eine zweite Rastverbindung ist zum lösbaren Sichern des Trägers am Einsatz vorgesehen.

Die Vorrichtung ermöglicht ein verdrehsicheres Halten einer Anzeigevorrichtung insbesondere für ein Spiegelersatzsystem bspw. in einem Nutzfahrzeug. Darüber hinaus kann die Vorrichtung auch universal zum Halten jeglicher anderer Komponente, beispielsweise im Haushalt, auf Schiffen und in Flugzeugen, verwendet werden. Die Vorrichtung kann verwendet werden, wenn ähnliche Anforderungen zum verdrehsicheren Halten einer Komponente bestehen. Die Komponente wird aufgrund der verdrehsicheren Verbindung zwischen Träger, Einsatz und Zapfen sicher am Zapfen (und dem damit verbundenen Bauteil) gehalten. Dadurch kann verhindert werden, dass auf die Vorrichtung einwirkende Kräfte, die bspw. beim Betrieb des Kraftfahrzeugs und insbesondere bei Unfällen auftreten können, zu keinem unbeabsichtigten Lösen der Elemente der Vorrichtung führt. Durch die verdrehsichere Verbindung kann ferner sichergestellt werden, dass der Träger (und damit die mit dem Träger verbundene Komponente) in einer gewünschten Ausrichtung festgelegt ist.

Die Vorrichtung weist zudem einen einfachen Aufbau mit wenigen Teilen auf, der insbesondere den Träger, den Einsatz und den Zapfen umfasst. Dies kann beispielsweise die Montage erleichtern. Zusätzlich ermöglicht die Vorrichtung die Anbindung einer Komponente an dem Zapfen ohne Verwendung von Schraubverbindungen. Die Installation des Trägers kann zudem nur in einer einzigen Ausrichtung erfolgen, die der gewünschten Ausrichtung entspricht. Somit muss keine aufwendige Einstellung der Ausrichtung des Trägers bei der Montage erfolgen.

Wie hierin verwendet, bedeutet der Begriff "rotationsasymmetrisch", dass der Querschnitt nicht rotationssymmetrisch ist. Zweidimensionale Objekte sind rotationssymmetrisch (auch kreissymmetrisch genannt), wenn eine Drehung um jeden beliebigen Winkel um einen Punkt das Objekt auf sich selbst abbildet. Dies ist ein Spezialfall der Drehsymmetrie, bei der das Objekt durch Drehung um bestimmte Winkel auf sich selbst abgebildet werden kann.

Vorzugsweise können der Einsatz und der Träger aus unterschiedlichen Materialien hergestellt sein. Damit können verschiedenste Materialpaarungen kombiniert werden. Zum Beispiel kann der Einsatz aus einem Kunststoffmaterial und der Träger aus einer Metalllegierung hergestellt sein.

Insbesondere können der Einsatz und der Träger einen Verbund bilden, der auf den Zapfen aufsteckbar ist.

Die verdrehsichere Verbindung kann auf unterschiedliche Weise zueinander erfolgen. Eine besonders sichere Verdrehsicherung ergibt sich durch Kombination der nachfolgenden beschriebenen Ausführungsbeispiele.

In einem Ausführungsbeispiel sind eine Außenkontur des Zapfens und eine Innenumfangsfläche der Zapfenaufnahme so aneinander angepasst, dass der Zapfen den Einsatz mittels eines Formschlusses zwischen dem Zapfen und der Zapfenaufnahme verdrehsicher bezüglich der Längsachse festlegt.

Alternativ oder zusätzlich sind eine Außenkontur des Einsatzes und eine Innenumfangsfläche der Einsatzaufnahme so aneinander angepasst, dass der Einsatz den Träger mittels eines Formschlusses zwischen dem Einsatz und der Einsatzaufnahme verdrehsicher bezüglich der Längsachse festlegt. Dies kann beispielsweise durch eine elliptische Geometrie realisiert werden.

In einem weiteren Ausführungsbeispiel legt der Zapfen den Einsatz zusätzlich mittels der ersten Rastverbindung verdrehsicher bezüglich der Längsachse fest. Alternativ oder zusätzlich legt der Einsatz den Träger zusätzlich mittels der zweiten Rastverbindung verdrehsicher bezüglich der Längsachse fest.

In einer besonders bevorzugten Ausführungsform wird zumindest ein Bereich des Einsatzes beim Einrasten der ersten Rastverbindung verformt, insbesondere gestaucht, sodass eine Vorspannkraft auf die erste Rastverbindung im eingerasteten Zustand bewirkt wird. Damit kann das Risiko eines unbeabsichtigten Lösens der zweiten Rastverbindung verringert werden.

Insbesondere kann der verformbare Bereich einen Bund des Einsatzes aufweisen, wobei der Träger im eingerasteten Zustand der zweiten Rastverbindung auf dem Bund aufliegt (aufsitzt).

Vorzugsweise kann der verformbare Bereich aus einem insbesondere elastisch verformbaren Material, vorzugsweise Kunststoff, hergestellt sein.

Es ist auch möglich, dass der verformbare Bereich lediglich den Bund des Einsatzes umfasst.

In einem bevorzugten Ausführungsbeispiel ist die Vorrichtung dreiteilig aus dem Träger, dem Einsatz und dem Zapfen bestehend aufgebaut. Damit werden lediglich drei Teile zum sicheren Halten einer Komponente, zum Beispiel einer Anzeigevorrichtung in einem Kraftfahrzeug, benötigt. Die Vorrichtung benötigt keine weiteren Teile. In anderen Ausführungsformen können bei Bedarf auch mehr als drei Teile verwendet werden.

In einer weiteren Ausführungsform weist die erste Rastverbindung einen sich entlang der Längsachse des Zapfens erstreckenden Schwenkarm des Einsatzes mit mindestens einer Rastnase auf. Die erste Rastverbindung weist zudem mindestens eine Rastöffnung des Zapfens auf.

In einer Ausführungsvariante weist die zweite Rastverbindung mindestens eine Rastnase des Einsatzes und mindestens eine Rastöffnung des Trägers auf.

In anderen Ausführungsvarianten können die Anordnung der Rastnasen und Rastöffnungen zwischen dem Träger und dem Einsatz sowie zwischen dem Einsatz und dem Zapfen vertauscht sein. Beispielsweise kann der Zapfen eine Rastnase aufweisen.

In einer weiteren Ausführungsvariante weist der Träger eine Öffnung auf, über die die erste Rastverbindung (insbesondere eine Entriegelung der ersten Rastverbindung) zum Lösen der ersten Rastverbindung zugänglich ist. Damit kann ein Verbund aus Träger und Einsatz vom Zapfen gelöst werden, wenn beispielsweise ein längliches Werkzeug durch die Öffnung zum Lösen der Rastverbindung eingeführt wird.

Insbesondere kann ein freies Ende des Schwenkarms der ersten Rastverbindung durch die Öffnung zugänglich sein, um ein Verschwenken des Schwenkarms zu ermöglichen. Das freie Ende dient als Entriegelung. Bspw. kann die Rastnase des Schwenkarms durch Verschwenken des Schwenkarms außer Eingriff mit der Rastöffnung des Zapfens gebracht werden.

In einer Weiterbildung ist die Öffnung in einer Stirnfläche oder einer Umfangsfläche des Trägers angeordnet. Damit kann die Zugänglichkeit zur Öffnung und somit zur ersten Rastverbindung verbessert werden.

In einem Ausführungsbeispiel ist der Träger rohrförmig und insbesondere mit einem elliptischen Querschnitt senkrecht zur Längsachse ausgebildet. Alternativ oder zusätzlich ist die Einsatzaufnahme insbesondere mit einem elliptischen Querschnitt senkrecht zur Längsachse ausgebildet. Die elliptische Ausbildung ermöglicht einen Formschluss, sodass eine verdrehsichere Ausrichtung des Trägers am Einsatz gewährleistet ist.

In einer besonders bevorzugten Ausführungsvariante ist die Vorrichtung ohne Schrauben (schraublos) ausgeführt ist. Damit wird ohne jegliche Schraubverbindung eine verdrehsichere und universale Vorrichtung zum Halten einer Komponente bereitgestellt.

In einer Ausführungsvariante weist der Zapfen einen Außenkonus und die Zapfenaufnahme einen an den Außenkonus des Zapfens angepassten Innenkonus auf. Die Konen erleichtern das Aufstecken des Einsatzes auf den Zapfen. Zugleich wird ein flächiger Kontakt zwischen dem Zapfen und dem Einsatz ermöglicht, was in einer Endlage/-position zu einer verbesserten Auflage führt. Zwischen den Konen entsteht ein spielfreier Formschluss.

In einer weiteren Ausführungsvariante erstreckt sich der Zapfen ausgehend von einer, insbesondere ebenen, Grundfläche. Eine Stirnfläche des Einsatzes liegt, insbesondere flächig, an der Grundfläche an. Damit kann wiederum ein zu bevorzugender flächiger Kontakt zwischen dem Zapfen und der Grundfläche hergestellt werden, um beispielsweise die Krafteinleitung zu verbessern.

Vorteilhafterweise kann die zweite Rastverbindung, insbesondere mindestens eine Rastnase der zweiten Rastverbindung, so angeordnet sein, dass die zweite Rastverbindung nicht gelöst werden kann, wenn der Zapfen in der Zapfenaufnahme positioniert ist. Somit ist ein Entrasten der zweiten Rastvorrichtung nur möglich, wenn der Verbund aus Träger und Einsatz nicht auf dem Zapfen aufgesteckt ist.

Die Erfindung kann besonders vorteilhaft in einem Kraftfahrzeug verwendet werden. Gemäß diesem Gesichtspunkt betrifft die Erfindung eine Vorrichtung zur Anbindung mindestens einer Interieurkomponente an einer A-Säule eines Kraftfahrzeugs, insbesondere Nutzfahrzeugs. Die Vorrichtung weist eine Konsole zur Befestigung an der A-Säule innerhalb eines Fahrerhauses des Kraftfahrzeugs auf. Die Vorrichtung zur Anbindung weist zudem die Vorrichtung zum Halten einer Komponente wie hierin offenbart auf, wobei der Zapfen an der Konsole befestigt oder integral mit der Konsole ausgebildet ist.

Die Erfindung betrifft auch ein Kraftfahrzeug, insbesondere Nutzfahrzeug (zum Beispiel Omnibus oder Lastkraftwagen), mit einer Vorrichtung wie hierin offenbart. Die Vorrichtung trägt vorzugsweise eine Anzeigevorrichtung für ein Spiegelersatzsystem des Kraftfahrzeugs.

Gemäß einem zweiten Aspekt der vorliegenden Offenbarung können der Einsatz und der Träger integral miteinander ausgebildet sein. In diesen Ausführungsformen weist der Träger die Merkmale des Einsatzes, die die Verbindung zum Zapfen betreffen, auf. Dagegen weist der Träger keine Merkmale auf, die sich auf die Befestigung des Einsatzes im Träger (zum Beispiel Einsatzaufnahme, zweite Rastverbindung usw.) beziehen, auf.

Gemäß dem zweiten Aspekt weist eine Vorrichtung zum Halten einer Komponente, insbesondere einer Anzeigevorrichtung in einem Kraftfahrzeug, einen Zapfen, der sich entlang einer Längsachse erstreckt und einen rotationsasymmetrischen Querschnitt senkrecht zur Längsachse aufweist, auf. Die Vorrichtung weist einen Träger zum Tragen der Komponente auf. Der Träger weist eine Zapfenaufnahme zum Aufsetzen des Trägers auf den Zapfen auf. Der Träger weist einen rotationsasymmetrischen Querschnitt senkrecht zur Längsachse auf, der so an den rotationsasymmetrischen Querschnitt des Zapfens angepasst ist, dass der Zapfen den Träger verdrehsicher bezüglich der Längsachse, insbesondere spielfrei, festlegt. Eine erste Rastverbindung ist zum lösbaren Sichern des Trägers am Zapfen vorgesehen.

Die Vorrichtung gemäß dem zweiten Aspekt kann wie die Vorrichtung gemäß dem ersten Aspekt, wie hierin offenbart ist, weitergebildet werden, solange keine Widersprüche auftreten.

Das nachfolgend unter Bezugnahme auf die Figuren beschriebene Ausführungsbeispiel ist dann gemäß dem zweiten Aspekt dahingehend zu ergänzen, dass der Einsatz und der Träger integral miteinander ausgebildet sein können. Zum Beispiel kann der Einsatz in den Träger eingespritzt sein. Alternativ könnte der Träger mit den Merkmalen des Trägers und des Einsatzes gemäß den unter Bezugnahme auf die Zeichnungen beschriebenen Ausführungsbeispiel in einem 3D-Druckverfahren gedruckt werden. Der Träger integriert dann die Funktion des Einsatzes.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht eines Bereichs eines Fahrerhauses eines Nutzfahrzeugs;
- Figur 2: eine weitere perspektivische Ansicht des Bereichs des Fahrerhauses eines Nutzfahrzeugs;
- Figur 3: eine perspektivische Ansicht einer beispielhaften Vorrichtung zum Halten einer Komponente;
- Figur 4: eine Draufsicht auf die beispielhafte Vorrichtung zum Halten einer Komponente;
- Figur 5: eine erste Seitenansicht der beispielhaften Vorrichtung zum Halten einer Komponente;
- Figur 6: eine zweite Seitenansicht der beispielhaften Vorrichtung zum Halten einer Komponente;
- Figur 7: eine erste Schnittansicht der beispielhaften Vorrichtung zum Halten einer Komponente;
- Figur 8: eine zweite Schnittansicht der beispielhaften Vorrichtung zum Halten einer Komponente;
- Figur 9: eine erste Seitenansicht eines Einsatzes der beispielhaften Vorrichtung zum Halten einer Komponente;
- Figur 10: eine zweite Seitenansicht des Einsatzes der beispielhaften Vorrichtung zum Halten einer Komponente;
- Figur 11: eine Schnittansicht des Einsatzes der beispielhaften Vorrichtung zum Halten einer Komponente;
- Figur 12: eine Draufsicht des Einsatzes der beispielhaften Vorrichtung zum Halten einer Komponente;
- Figur 13: eine erste Seitenansicht eines Zapfens der beispielhaften Vorrichtung zum Halten einer Komponente; und
- Figur 14: eine zweite Seitenansicht des Zapfens der beispielhaften Vorrichtung zum Halten einer Komponente.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

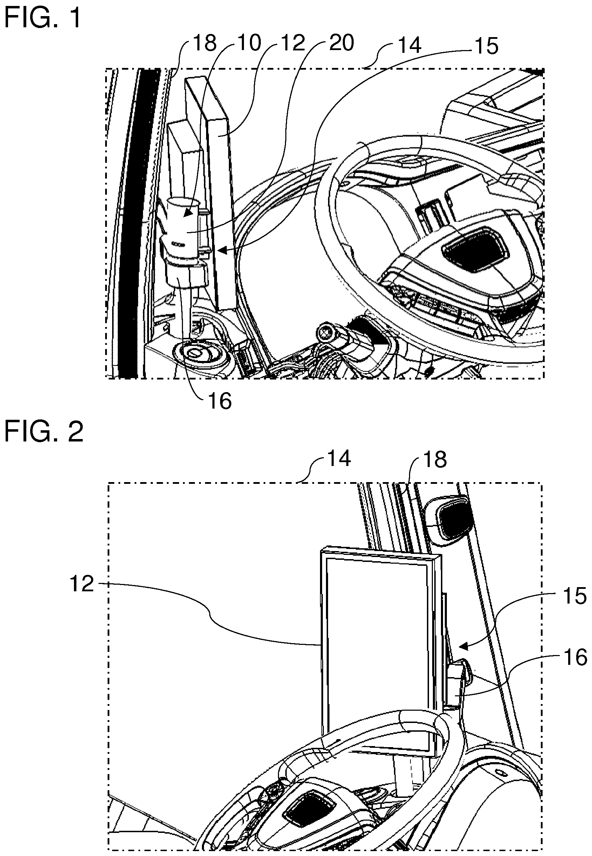

Die Figuren 1 und 2 zeigen ein besonders bevorzugtes Ausführungsbeispiel. Hier ist eine Vorrichtung 10 zum Halten einer Komponente 12 in ein Fahrerhaus 14 eines Kraftfahrzeugs eingebaut. Das Kraftfahrzeug ist als ein Nutzfahrzeug ausgebildet, zum Beispiel ein Lastkraftwagen oder ein Omnibus. Im Einzelnen ist die Vorrichtung 10 über eine Konsole 16 an einer A-Säule 18 des Fahrerhauses 14 beispielsweise über eine Schraubverbindung befestigt. Die Vorrichtung 10 und die Konsole 16 bilden zusammen eine Vorrichtung 15 zur Anbindung mindestens einer Interieurkomponente (hier: Komponente 12) an der A-Säule 18.

Die Vorrichtung 15 kann bspw. wie in der unter dem amtlichen Aktenzeichen DE 10 2017 112 427.6 eingereichten Patentanmeldung ausgebildet sein, die hierin insbesondere bezüglich der Konfiguration der Vorrichtung zur Anbindung mindestens einer Interieurkomponente durch Bezugnahme mitaufgenommen ist, wobei die zweite Anbindungsstelle (Bezugszeichen 112) modifiziert gemäß der hierin offenbarten Vorrichtung zum Halten einer Komponente ausgebildet ist.

Die Komponente 12 ist als eine Anzeigevorrichtung ausgebildet. Beispielsweise kann auf der Anzeigevorrichtung ein von einem (linken Außen-) Spiegelersatzsystem aufgenommenes Kamerabild angezeigt werden. Auf der Beifahrerseite kann beispielsweise eine weitere Vorrichtung zum Halten einer weiteren Anzeigevorrichtung für ein weiteres (rechtes Außen-) Spiegelersatzsystem vorgesehen sein (nicht dargestellt).

Es ist auch möglich, dass die Komponente 12 als eine andere Interieurkomponente des Kraftfahrzeugs ausgebildet ist. Ebenso besteht die Möglichkeit, die Vorrichtung 10 zum Halten jeglicher anderer Komponente zu verwenden.

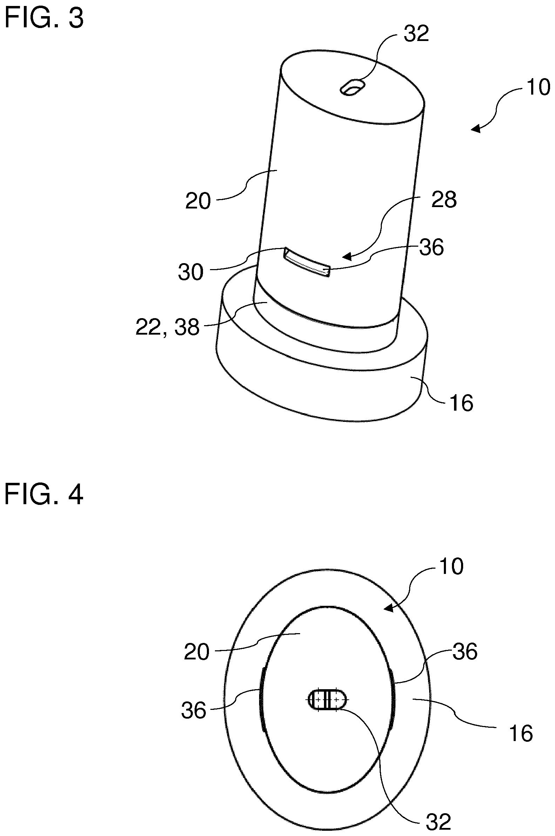

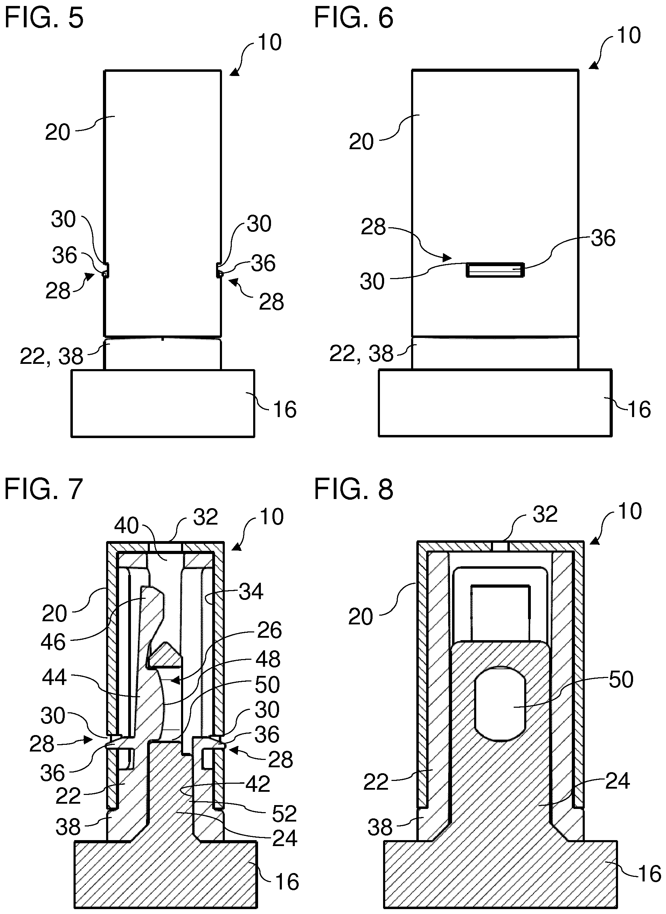

In den Figuren 3 bis 8 ist die Vorrichtung 10 im zusammengebauten Zustand gezeigt. Die Vorrichtung 10 weist einen Träger 20, einen Einsatz (Inlay) 22 und einen Zapfen (Dorn) 24 auf. Eine erste Rastverbindung 26 befestigt den Einsatz 22 am Zapfen 24. Eine zweite Rastverbindung 28 befestigt den Träger 20 am Einsatz 22.

Der Träger 20 dient zum Halten der Komponente 12 (siehe Figuren 1 und 2). Die Komponente 12 kann direkt oder indirekt über ein Zwischenglied, zum Beispiel ein Schwenkarm, an dem Träger 20 angebracht sein. Die Anbringung kann an die jeweiligen Anforderungen angepasst sein. Zum Beispiel kann der Träger 20 aus einer Metalllegierung hergestellt sein und die Komponente oder das Zwischenglied an den Träger 20 geschweißt sein. Andere Verfahren zur Anbringung, zum Beispiel Kleben oder Gießen, sowie andere Materialien für den Träger, zum Beispiel Kunststoff, sind ebenfalls möglich.

Der Träger 20 weist zwei Rastöffnungen 30 auf. Die Rastöffnungen 30 sind an gegenüberliegenden Seiten einer Mantelfläche des Trägers 20 positioniert. Der Träger 20 weist zudem eine (Werkzeug-) Öffnung 32 auf. Die Öffnung 32 ist in einer Stirnfläche des Trägers 20 positioniert.

Der Träger 20 ist als ein rohrförmiger Hohlkörper mit einer Einsatzaufnahme 34 für den Einsatz 22 ausgebildet. Der Einsatz 22 ist in die Einsatzaufnahme 34 des Trägers 20 eingesteckt. Zum Befestigen des Einsatzes 22 in der Einsatzaufnahme 34 weist der Einsatz 22 zwei Rastnasen 36 auf. Beim Zusammenbauen wird der Einsatz 22 in den Träger 20 eingeschoben, wobei die Rastnasen 36 mit den Rastöffnungen 30 ineinandergreifen. Die Rastnasen 36 und die Rastöffnungen 30 bilden die zweite Rastverbindung 28. Im zusammengebauten Zustand sitzt der Träger 20 auf einem Bund (Kragenbereich) 38 des Einsatzes 22 auf.

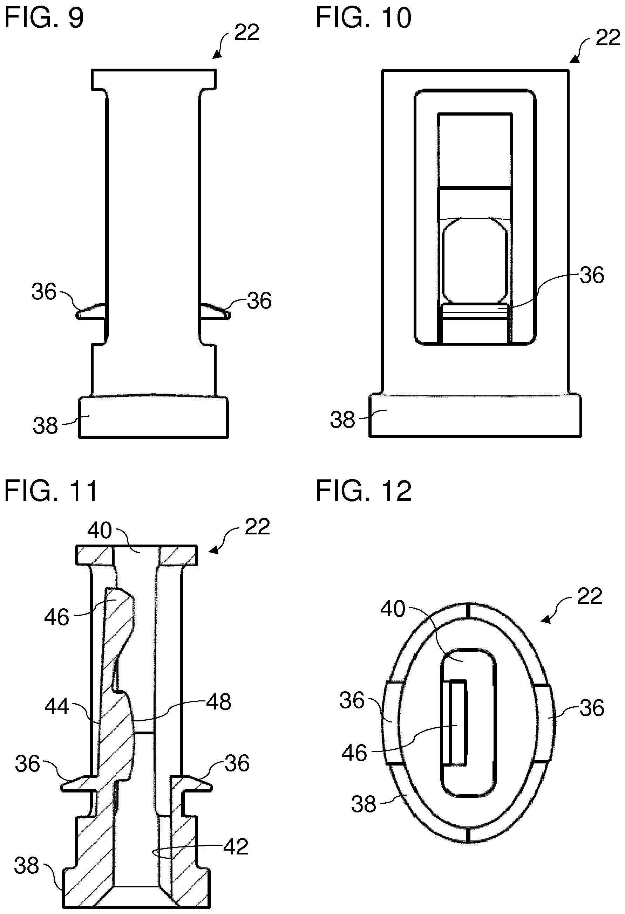

In den Figuren 9 bis 12 ist der Einsatz 22 einzeln und im Detail dargestellt. Der Einsatz 22 ist als ein länglicher Körper ausgebildet. Der Einsatz 22 kann beispielsweise aus einem Kunststoff hergestellt sein. Der Einsatz 22 weist eine elliptische Grundfläche auf. Der Einsatz 22 weist ein Längsloch 40 auf. Das Längsloch 40 erstreckt sich zwischen den Stirnflächen des Einsatzes 22. Ein Bereich des Längslochs 40 dient als Zapfenaufnahme 42 für den Zapfen 24. Im unteren Bereich weist das Längsloch 40 einen Innenkonus auf.

Der Einsatz 22 weist einen Schwenkarm 44 auf. Der Schwenkarm 44 ist aufgrund der Materialeigenschaft und Dimensionierung innerhalb eines geringen Winkelbereichs schwenkbar. Die Schwenkachse ist an einem dem freien Ende des Schwenkarms 44 entgegengesetzten Ende des Schwenkarms 44 angeordnet. Das freie Ende dient als eine Entriegelung 46 zum Entriegeln des Schwenkarms 44. Der Schwenkarm 44 weist eine Rastnase 48 auf. Die Rastnase 48 dient zum Befestigen des Einsatzes 22 am Zapfen 24.

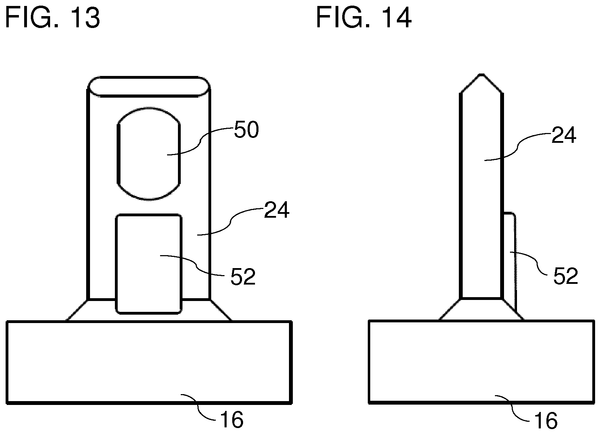

Die Figuren 13 und 14 zeigen den Zapfen 24 einzeln und im Detail. Der Zapfen 24 ist als ein länglicher Körper ausgebildet. Der Zapfen 24 erstreckt sich von einer ebenen Grundfläche. Die ebene Grundfläche kann beispielsweise ein Bereich der Konsole 16 sein. Der Zapfen 24 kann beispielsweise integral mit der Konsole 16 ausgebildet oder an der Konsole 16 befestigt sein.

Der Zapfen 24 weist eine Rastöffnung 50 auf. Beim Zusammenbauen wird der bereits in den Träger 20 eingesteckte Einsatz 22 auf den Zapfen 24 aufgesteckt. Dabei greifen die Rastnase 48 und die Rastöffnung 50 ineinander. Die Rastnase 48 und die Rastöffnung 50 bilden die erste Rastvorrichtung 26. Im aufgesetzten Zustand liegt ein Stirnfläche (Bodenfläche) des Einsatzes 22 auf einer den Zapfen 24 umgebenden Grundfläche auf.

Der Zapfen 24 weist an einem dem freien Ende des Zapfens 24 entgegengesetzten Ende einen Außenkonus auf, der im montierten Zustand an dem Innenkonus des Einsatzes 22 anliegt.

Um die Baugruppe aus Träger 20 und Einsatz 22 vom Zapfen 24 zu lösen, kann ein längliches Werkzeug durch die Öffnung 32 eingeführt werden. Mit dem Werkzeug kann dann die erste Rastverbindung 26 durch Verschwenken der Entriegelung 46 des Schwenkarms 44 gelöst werden. Die Öffnung 32 kann an das Werkzeug angepasst sein, sodass beispielsweise nur Spezialwerkzeug durch die Öffnung 32 einführbar ist.

Bezüglich des oben beschriebenen Ausführungsbeispiels ist hervorzuheben, dass die Vorrichtung 10 so ausgebildet ist, dass der Träger 20 spielfrei und verdrehsicher bezüglich einer Längsachse des Zapfens 24 oder des Einsatzes 22 am Einsatz 22 befestigt ist. Zudem ist der Einsatz 22 spielfrei und verdrehsicher bezüglich einer Längsachse des Zapfens 24 am Zapfen 24 befestigt. Damit kann die Komponente 12 sicher über den Träger 20 gehalten werden.

Die spielfreie und verdrehsichere Befestigung zwischen dem Träger 20 und dem Einsatz 22 wird einerseits durch die zweite Rastverbindung 28 ermöglicht. Andererseits besteht ein Formschluss zwischen den im Querschnitt elliptischen oder gebogenen Kontaktflächen des Einsatzes 22 und des Zapfens 24. Im Einzelnen sind eine Außenkontur des Einsatzes 22 und eine Innenumfangsfläche der Einsatzaufnahme 34 so aneinander angepasst, dass der Einsatz 22 den Träger 20 mittels eines Formschlusses zwischen dem Einsatz 22 und der Einsatzaufnahme 34 verdrehsicher bezüglich der Längsachse festlegt.

Die spielfreie und verdrehsichere Befestigung zwischen dem Einsatz 22 und dem Zapfen 24 wird einerseits durch die erste Rastverbindung 26 ermöglicht. Zusätzlich besteht ein Formschluss zwischen den Kontaktflächen des Einsatzes 22 und des Zapfens 24. Im Einzelnen sind eine Außenkontur des Zapfens 24 und eine Innenumfangsfläche der Zapfenaufnahme 42 so aneinander sind, dass der Zapfen 24 den Einsatz 22 mittels eines Formschlusses zwischen dem Zapfen 24 und der Zapfenaufnahme 42 verdrehsicher bezüglich der Längsachse festlegt. Der verdrehsichere und spielfreie Formschluss wird durch die rotationsasymmetrische Querschnittsform der Innenumfangsfläche der Zapfenaufnahme 42 und der Außenkontur des Einsatzes 22 ermöglicht. Insbesondere weist der Zapfen 24 zusätzlich einen Vorsprung 52 auf, der in einen entsprechend angepassten Abschnitt der Zapfenaufnahme 42 positionierbar ist, um den verdrehsicheren (drehfesten) und spielfreien Formschluss weiter zu verbessern

Zusätzlich ist hervorzuheben, dass der Einsatz 22 zumindest bereichsweise aus einem weichen bzw. elastisch verformbaren Material hergestellt sein kann. Insbesondere kann der Bund 38, auf dem der Träger 20 aufsitzt, (bspw. elastisch) in einer Richtung zu der Konsole 16 verformbar ausgebildet sein. Beim Aufstecken des Einsatzes 22 auf den Zapfen 24 kann der Bund 38 gestaucht werden. Diese Stauchung bewirkt eine Vorspannkraft auf die erste Rastvorrichtung 26 im eingerasteten Zustand.

Wenn der Träger 20 zusammen mit dem Einsatz 22 auf den Zapfen 24 aufgesteckt ist, kann die zweite Rastverbindung 28 nicht gelöst werden. Das Lösen der zweiten Rastverbindung 28 erfordert eine Bewegung der zwei Rastnasen 36 in einer Richtung zueinander, wodurch sich die Zapfenaufnahme 42 verkleinert. Da der Zapfen 24 in der Zapfenaufnahme 42 vorgesehen ist, können die Rastnasen 36 nicht aufeinander zu bewegt werden. Die zweite Rastverbindung 28 kann aufgrund der Wirkung des Zapfens 24 in der Zapfenaufnahme 42 nicht gelöst werden.

Weiterhin ist hervorzuheben, dass es sich bei der beispielhaften Vorrichtung 10 um eine vollständig schraublose (schraubenlose) Anbindung für die Komponente 12 handelt.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 10: Vorrichtung zum Halten einer Komponente
- 12: Komponente (Anzeigevorrichtung)
- 14: Fahrerhaus
- 15: Vorrichtung zur Anbindung mindestens einer Interieurkomponente
- 16: Konsole
- 18: A-Säule
- 20: Träger (Halterung)
- 22: Einsatz
- 24: Zapfen
- 26: Erste Rastverbindung
- 28: Zweite Rastverbindung
- 30: Rastöffnung
- 32: (Werkzeug-) Öffnung
- 34: Einsatzaufnahme
- 36: Rastnase
- 38: Bund
- 40: Längsloch
- 42: Zapfenaufnahme
- 44: Schwenkarm
- 46: Entriegelung (freies Ende des Schwenkarms)
- 48: Rastnase
- 50: Rastöffnung
- 52: Vorsprung

## Patentansprüche

1. Vorrichtung (10) zum Halten einer Komponente (12), insbesondere einer Anzeigevorrichtung in einem Kraftfahrzeug, aufweisend:
einen Zapfen (24), der sich entlang einer Längsachse erstreckt und einen rotationsasymmetrischen Querschnitt senkrecht zur Längsachse aufweist;
einen Einsatz (22) mit einer Zapfenaufnahme (42) zum Aufsetzen des Einsatzes (22) auf den Zapfen (24), wobei der Einsatz (22) einen rotationsasymmetrischen Querschnitt senkrecht zur Längsachse aufweist, der so an den rotationsasymmetrischen Querschnitt des Zapfens (24) angepasst ist, dass der Zapfen (24) den Einsatz (22) verdrehsicher bezüglich der Längsachse, insbesondere spielfrei, festlegt; und
einen Träger (20) zum Tragen der Komponente (12), wobei der Träger (20) als ein Hohlkörper mit einer Einsatzaufnahme (34) zum Aufnehmen des Einsatzes (22) ausgebildet ist, wobei der Träger (20) einen rotationsasymmetrischen Querschnitt senkrecht zur Längsachse aufweist, der so an den rotationsasymmetrischen Querschnitt des Einsatzes (22) angepasst, dass der Einsatz (22) den Träger (20) verdrehsicher bezüglich der Längsachse, insbesondere spielfrei, festlegt,
wobei eine erste Rastverbindung (26) zum lösbaren Sichern des Einsatzes (22) am Zapfen (24) und eine zweite Rastverbindung (28) zum lösbaren Sichern des Trägers (20) am Einsatz (22) vorgesehen ist,
**dadurch gekennzeichnet, dass**
der Träger (20) eine Öffnung (32) aufweist, über die eine Entriegelung (46) der ersten Rastverbindung (26) zum Lösen der ersten Rastverbindung (26) zugänglich ist.

2. Vorrichtung (10) nach Anspruch 1, wobei:
eine Außenkontur des Zapfens (24) und eine Innenumfangsfläche der Zapfenaufnahme (42) so aneinander angepasst sind, dass der Zapfen (24) den Einsatz (22) mittels eines Formschlusses zwischen dem Zapfen (24) und der Zapfenaufnahme (42) verdrehsicher bezüglich der Längsachse festlegt.

3. Vorrichtung (10) nach Anspruch 1 oder Anspruch 2, wobei:
eine Außenkontur des Einsatzes (22) und eine Innenumfangsfläche der Einsatzaufnahme (34) so aneinander angepasst sind, dass der Einsatz (22) den Träger (20) mittels eines Formschlusses zwischen dem Einsatz (22) und der Einsatzaufnahme (34) verdrehsicher bezüglich der Längsachse festlegt.

4. Vorrichtung (10) nach einem der vorherigen Ansprüche, wobei zumindest ein Bereich des Einsatzes (22) beim Einrasten der ersten Rastverbindung (26) verformt, insbesondere gestaucht, wird, sodass eine Vorspannkraft auf die erste Rastverbindung (26) im eingerasteten Zustand bewirkt wird.

5. Vorrichtung (10) nach einem der vorherigen Ansprüche, wobei die Vorrichtung (10) dreiteilig bestehend aus dem Träger (20), dem Einsatz (22) und dem Zapfen (24) aufgebaut ist.

6. Vorrichtung (10) nach einem der vorherigen Ansprüche, wobei die erste Rastverbindung (26) einen sich entlang der Längsachse des Zapfens (24) erstreckenden Schwenkarm (44) des Einsatzes (22) mit mindestens einer Rastnase (48) und mindestens eine Rastöffnung (50) des Zapfens (24) aufweist.

7. Vorrichtung (10) nach einem der vorherigen Ansprüche, wobei die zweite Rastverbindung (28) mindestens eine Rastnase (36) des Einsatzes (22) und mindestens eine Rastöffnung (30) des Trägers (20) aufweist.

8. Vorrichtung (10) nach einem der vorherigen Ansprüche, wobei die Öffnung (32) in einer Stirnfläche oder einer Umfangsfläche des Trägers (20) angeordnet ist.

9. Vorrichtung (10) nach einem der vorherigen Ansprüche, wobei:
der Träger (20) rohrförmig mit einem elliptischen Querschnitt senkrecht zur Längsachse ausgebildet ist; und/oder
die Einsatzaufnahme (34) mit einem elliptischen Querschnitt senkrecht zur Längsachse ausgebildet ist.

10. Vorrichtung (10) nach einem der vorherigen Ansprüche, wobei die Vorrichtung (10) schraublos ausgeführt ist.

11. Vorrichtung (10) nach einem der vorherigen Ansprüche, wobei der Zapfen (24) einen Außenkonus und die Zapfenaufnahme (42) einen an den Außenkonus des Zapfens (24) angepassten Innenkonus aufweist.

12. Vorrichtung (10) nach einem der vorherigen Ansprüche, wobei der Zapfen (24) sich ausgehend von einer, insbesondere ebenen, Grundfläche erstreckt und eine Stirnfläche des Einsatzes (22), insbesondere flächig, an der Grundfläche anliegt.

13. Vorrichtung (15) zur Anbindung mindestens einer Interieurkomponente (12) an einer A-Säule (18) eines Kraftfahrzeugs, insbesondere Nutzfahrzeugs, aufweisend:
eine Konsole (16) zur Befestigung an der A-Säule (18) innerhalb eines Fahrerhauses (14) des Kraftfahrzeugs; und
eine Vorrichtung (10) nach einem der vorherigen Ansprüche, wobei der Zapfen (24) an der Konsole (16) befestigt oder integral mit der Konsole (16) ausgebildet ist.

14. Kraftfahrzeug, insbesondere Nutzfahrzeug, mit einer Vorrichtung (10; 15) nach einem der vorherigen Ansprüche, wobei die Vorrichtung vorzugsweise eine Anzeigevorrichtung (12) für ein Spiegelersatzsystem trägt.

## Claims

1. Device (10) for holding a component (12), in particular a display device in a motor vehicle, having:
a peg (24) which extends along a longitudinal axis and has a rotationally asymmetric cross section perpendicular to the longitudinal axis;
an insert (22) having a peg receptacle (42) for placing the insert (22) on the peg (24), wherein the insert (22) has a rotationally asymmetric cross section perpendicular to the longitudinal axis, said cross section being matched to the rotationally asymmetric cross section of the peg (24) such that the peg (24) fixes the insert (22) in a rotationally fixed manner with respect to the longitudinal axis, in particular in a play-free manner; and
a carrier (20) for carrying the component (12), wherein the carrier (20) is in the form of a hollow body having an insert receptacle (34) for receiving the insert (22), wherein the carrier (20) has a rotationally asymmetric cross section perpendicular to the longitudinal axis, said cross section being matched to the rotationally asymmetric cross section of the insert (22) such that the insert (22) fixes the carrier (20) in a rotationally fixed manner with respect to the longitudinal axis, in particular in a play-free manner,
wherein a first latching connection (26) is provided for releasably securing the insert (22) to the peg (24) and a second latching connection (28) is provided for releasably securing the carrier (20) to the insert (22),
**characterized in that**
the carrier (20) has an opening (32), via which an unlocking mechanism (46) of the first latching connection (26) is accessible in order to release the first latching connection (26).

2. Device (10) according to Claim 1, wherein:
an outer contour of the peg (24) and an inner peripheral surface of the peg receptacle (42) are matched to one another such that the peg (24) fixes the insert (22) in a rotationally fixed manner with respect to the longitudinal axis by means of a form fit between the peg (24) and the peg receptacle (42).

3. Device (10) according to Claim 1 or Claim 2, wherein:
an outer contour of the insert (22) and an inner peripheral surface of the insert receptacle (34) are matched to one another such that the insert (22) fixes the carrier (20) in a rotationally fixed manner with respect to the longitudinal axis by means of a form fit between the insert (22) and the insert receptacle (34).

4. Device (10) according to one of the preceding claims, wherein at least one region of the insert (22) is deformed, in particular is compressed, when the first latching connection (26) engages, such that a preloading force is brought about on the first latching connection (26) in the engaged state.

5. Device (10) according to one of the preceding claims, wherein the device (10) is constructed in three parts consisting of the carrier (20), the insert (22) and the peg (24).

6. Device (10) according to one of the preceding claims, wherein the first latching connection (26) has a pivot arm (44), extending along the longitudinal axis of the peg (24), of the insert (22) with at least one latching protrusion (48) and at least one latching opening (50) in the peg (24).

7. Device (10) according to one of the preceding claims, wherein the second latching connection (28) has at least one latching protrusion (36) on the insert (22) and at least one latching opening (30) in the carrier (20) .

8. Device (10) according to one of the preceding claims, wherein the opening (32) is arranged in an end face or a peripheral face of the carrier (20).

9. Device (10) according to one of the preceding claims, wherein:
the carrier (20) is formed in a tubular manner with an elliptical cross section perpendicular to the longitudinal axis; and/or
the insert receptacle (34) is formed with an elliptical cross section perpendicular to the longitudinal axis.

10. Device (10) according to one of the preceding claims, wherein the device (10) is embodied in a screwless manner.

11. Device (10) according to one of the preceding claims, wherein the peg (24) has an outer cone and the peg receptacle (42) has an inner cone matched to the outer cone of the peg (24).

12. Device (10) according to one of the preceding claims, wherein the peg (24) extends from an, in particular planar, base, and an end face of the insert (22) bears, in particular in a flat manner, against the base.

13. Device (15) for attaching at least one interior component (12) to an A pillar (18) of a motor vehicle, in particular of a commercial vehicle, having:
a bracket (16) for fastening to the A pillar (18) within a cab (14) of the motor vehicle; and
a device (10) according to one of the preceding claims, wherein the peg (24) is fastened to the bracket (16) or is formed integrally with the bracket (16).

14. Motor vehicle, in particular commercial vehicle, having a device (10; 15) according to one of the preceding claims, wherein the device carries preferably a display device (12) for a mirror replacement system.

## Revendications

1. Dispositif (10) pour retenir un composant (12), en particulier un dispositif d'affichage dans un véhicule automobile, présentant :
un tourillon (24) qui s'étend le long d'un axe longitudinal et qui présente une section transversale asymétrique en rotation perpendiculairement à l'axe longitudinal ;
un insert (22) avec un logement de tourillon (42) prévu pour placer l'insert (22) sur le tourillon (24), l'insert (22) présentant une section transversale asymétrique en rotation perpendiculairement à l'axe longitudinal, laquelle est adaptée à la section transversale asymétrique en rotation du tourillon (24) de telle sorte que le tourillon (24) fixe l'insert (22) de manière solidaire en rotation par rapport à l'axe longitudinal, en particulier sans jeu ; et
un support (20) pour supporter le composant (2), le support (20) étant réalisé sous la forme d'un corps creux avec un logement d'insert (34) pour recevoir l'insert (22), le support (20) présentant une section transversale asymétrique en rotation perpendiculairement à l'axe longitudinal, laquelle est adaptée à la section transversale asymétrique en rotation de l'insert (22) de telle sorte que l'insert (22) fixe le support (20) de manière solidaire en rotation par rapport à l'axe longitudinal, en particulier sans jeu,
une première connexion par encliquetage (26) pour la fixation amovible de l'insert (22) au tourillon (24) et une deuxième connexion par encliquetage (28) pour la fixation amovible du support (20) à l'insert (22) étant prévues,
**caractérisé en ce que**
le support (20) présente une ouverture (32) par le biais de laquelle un déverrouillage (46) de la première connexion par encliquetage (26), pour desserrer la première connexion par encliquetage (26), est accessible.

2. Dispositif (10) selon la revendication 1, dans lequel :
un contour extérieur du tourillon (24) et une surface périphérique intérieure du logement de tourillon (42) sont adaptés l'un à l'autre de telle sorte que le tourillon (24) fixe l'insert (22) au moyen d'un engagement par correspondance de formes entre le tourillon (24) et le logement de tourillon (42) de manière solidaire en rotation par rapport à l'axe longitudinal.

3. Dispositif (10) selon la revendication 1 ou la revendication 2, dans lequel :
un contour extérieur de l'insert (22) et une surface périphérique intérieure du logement d'insert (34) sont adaptés l'un à l'autre de telle sorte que l'insert (22) fixe le support (20) au moyen d'un engagement par correspondance de formes entre l'insert (22) et le logement d'insert (34) de manière solidaire en rotation par rapport à l'axe longitudinal.

4. Dispositif (10) selon l'une quelconque des revendications précédentes, dans lequel au moins une région de l'insert (22) est déformée lors de l'encliquetage de la première connexion par encliquetage (26), en particulier est comprimée, de telle sorte qu'une force de précontrainte soit appliquée à la première connexion par encliquetage (26) dans l'état encliqueté.

5. Dispositif (10) selon l'une quelconque des revendications précédentes, dans lequel le dispositif (10) est réalisé en trois parties constituées du support (20), de l'insert (22) et du tourillon (24).

6. Dispositif (10) selon l'une quelconque des revendications précédentes, dans lequel la première connexion par encliquetage (26) présente un bras pivotant (44) de l'insert (22) s'étendant le long de l'axe longitudinal du tourillon (24) avec au moins un ergot d'encliquetage (48) et au moins une ouverture d'encliquetage (50) du tourillon (24).

7. Dispositif (10) selon l'une quelconque des revendications précédentes, dans lequel la deuxième connexion par encliquetage (28) présente au moins un ergot d'encliquetage (36) de l'insert (22) et au moins une ouverture d'encliquetage (30) du support (20).

8. Dispositif (10) selon l'une quelconque des revendications précédentes, dans lequel l'ouverture (32) est disposée dans une surface frontale ou une surface périphérique du support (20) .

9. Dispositif (10) selon l'une quelconque des revendications précédentes, dans lequel :
le support (20) est réalisé sous forme tubulaire avec une section transversale elliptique perpendiculairement à l'axe longitudinal ; et/ou le logement d'insert (34) est réalisé avec une section transversale elliptique perpendiculairement à l'axe longitudinal.

10. Dispositif (10) selon l'une quelconque des revendications précédentes, dans lequel le dispositif est réalisé sans vissage.

11. Dispositif (10) selon l'une quelconque des revendications précédentes, dans lequel le tourillon (24) présente un cône extérieur et le logement de tourillon (42) présente un cône intérieur adapté au cône extérieur du tourillon (24) .

12. Dispositif (10) selon l'une quelconque des revendications précédentes, dans lequel le tourillon (24) s'étend à partir d'une surface de base notamment plane et une surface frontale d'insert (22) s'applique notamment à plat contre la surface de base.

13. Dispositif (15) pour relier au moins un composant intérieur (12) à une colonne A (18) d'un véhicule automobile, en particulier d'un véhicule utilitaire, présentant :
une console (16) pour la fixation à la colonne A (18) à l'intérieur d'une cabine de conducteur (14) du véhicule automobile ; et
un dispositif (10) selon l'une quelconque des revendications précédentes, le tourillon (24) étant fixé à la console (16) ou étant réalisé intégralement avec la console (16).

14. Véhicule automobile, en particulier véhicule utilitaire, comprenant un dispositif (10 ; 15) selon l'une quelconque des revendications précédentes, le dispositif portant de préférence un dispositif d'affichage (12) pour un système de remplacement de rétroviseur.
